# EUROPÄISCHE PATENTSCHRIFT

(11) **EP 2 825 697 B1**
(45) Veröffentlichungstag und Bekanntmachung des Hinweises auf die Patenterteilung: **04.05.2016**
(21) Anmeldenummer: 13719002.1
(22) Anmeldetag: 11.03.2013
(51) Int. Cl.: D21B 1/32, D21C 5/02, D21D 5/02, D21B 1/34, D21B 1/22

(54) **AUFBEREITER MIT EINEM SIEBBLECH UND VERWENDUNGEN EINES DERARTIGEN AUFBEREITERS**
PULPER WITH SCREENING MEANS AND METHOD OF SCREENING A FIBER MASS
TRITURATEUR DOTÉ D'UNE TÔLE DE CRIBLAGE ET UTILISATIONS D'UN TEL TRITURATEUR

(30) Priorität: 13.03.2012 DE 102012004839; 02.04.2012 DE 102012006562; 19.04.2012 DE 102012007708; 25.04.2012 DE 102012008132; 29.11.2012 DE 102012023258
(43) Veröffentlichungstag der Anmeldung: 21.01.2015
(73) Patentinhaber: Boltersdorf, Hans-Joachim, 56656 Brohl-Lützing (DE)
(72) Erfinder: Boltersdorf, Hans-Joachim, 56656 Brohl-Lützing (DE)
(74) Vertreter: Castell, Klaus
(86) Internationale Anmeldenummer: PCT/DE2013/000129
(87) Internationale Veröffentlichungsnummer: WO 2013/135224

(56) Entgegenhaltungen:
- EP-A1- 2 163 683
- EP-A2- 0 158 827
- WO-A1-2009/034230
- WO-A1-2011/144196

## Beschreibung

Die Erfindung betrifft einen Aufbereiter mit einem geschlossenen Gefäß. Außerdem betrifft die Erfindung ein Verfahren zum Betrieb eines Pulpers mit einem solchen Aufbereiter.

Für die Aufbereitung faserhaltiger Rohstoffe sind unterschiedliche Aufbereiter bekannt. Diese Aufbereiter unterscheiden sich im Hinblick auf den Faserstoffrückgewinnungsgrad, die Faserstoffgewinnung pro Zeiteinheit, die Faserstoffqualität, den spezifischen Strombedarf, den Wärme- und Hilfsmittelbedarf und den spezifischen Kapitalbedarf. Bereits kleinere konstruktive Änderungen in der Ausbildung eines Aufbereiters haben einen starken Einfluss auf diese Faktoren. Wegen der hohen Stoffmengen, die mit diesen Aufbereitern behandelt werden, wirken somit bereits minimale konstruktive Änderungen auf die Rentabilität eines Aufbereiters.

Ein gattungsgemäßer Aufbereiter ist aus der EP 2 163 683 A1 bekannt und ein gattungsgemäßes Verfahren beschreibt die WO 2009/034230 A1.

Der Erfindung liegt daher die Aufgabe zugrunde, einen Aufbereiter derart weiterzuentwickeln, dass er möglichst viele Funktionen übernehmen kann und für unterschiedliche Sekundärrohstoffe geeignet ist. Außerdem wird ein Verfahren zum Betrieb eines Pulpers mit einem solchen Aufbereiter bereitgestellt.

Diese Aufgabe wird mit einem Aufbereiter mit den Merkmalen des Patentanspruchs 1 und mit einem Verfahren mit den Verfahrensschritten des Patentanspruchs 14 gelöst.

Dieser Aufbereiter ist je nach Ausführungsform für folgende Funktionen geeignet: Suspendierung, Sortierung, Endstufensortierung, Fraktionierung, Weißgradsteigerung, Mahlung und teilweise Entsandung. Sofern der Aufbereiter eine Heizeinrichtung aufweist, ist er sogar zum Dispergieren geeignet. Bei Verwendung eines Maschensiebes kann der Aufbereiter auch als Eindicker arbeiten.

Der Aufbereiter ist insbesondere für folgende Sekundärstoffe geeignet: Faserhaltige Rohstoffe aus den Bereichen der Papierindustrie (Altpapieraufbereitung, Papiermaschine, Papierverarbeitung), der dualen Systeme, der gewerblichen Wirtschaft, dem Biomüllbereich, der Restmüllveuwettung und der Holzwirtschaft.

Darüber hinaus eignet sich der Aufbereiter auch für Verbundstoffe wie Getränkekartons, Tapeten, Kraftsäcke, kaschierte Pappe, Plakate, Fotopapiere, Windeln und Absorberverbunde, Papier-Aluminiumverbundstoffe und Papier-Kunststoffverbundstoffe.

Weiterhin eignet er sich für die Aufbereitung von Etiketten, Brandsohlen, nassfesten Seidenpapieren, Filterpapieren, nassfesten Tissuepapieren, Landkartenpapier und Briefmarkenpapier. Aus dem Bereich der gewerblichen Wirtschaft außerhalb der Papierindustrie ist beispielsweise die Aufbereitung abgelaugter Etiketten zu nennen. Aus dem Bereich der dualen Systeme werden PET-Flakes und DS-Fraktionen genannt und aus dem Biomüllbereich Bioabfälle aus den Märkten und Grünschnitt wie insbesondere Gras. Weiterhin ist der Aufbereiter für faserhaltige Rohstoffe wie beispielsweise Stroh und Hackschnitzel geeignet.

Der Aufbereiter ist für einen Chargenbetrieb oder einen Batchbetrieb geeignet, der in der Regel vorteilhafter ist als ein vollkontinuierlicher Betrieb.

Bei der konstruktiven Ausgestaltung des Aufbereiters ist es vorteilhaft, wenn der obere Bereich vom unteren Bereich trennbar ist.

Eine vorteilhafte Ausgestaltung sieht vor, dass am oberen Ende des unteren Bereichs ein Kragen angeordnet ist. Die Länge dieses Kragens wirkt auf die Höhe dieses Pulperbereiches und ermöglicht es, diese Höhe individuell zu gestalten. Der Kragen verhindert oder behindert einen Rückfluss von unten nach oben, d.h. aus dem unteren Bereich in den oberen Bereich des Aufbereiters. Der Kragen kann einfach als Einschnürung ausgebildet sein. Er kann aber auch einen sich nach unten verengenden Konus und dahinter eine Erweiterung aufweisen, so dass der Fluss von oben nach unten vom Kragen geführt wird und ein Fluss von unten nach oben vom Kragen behindert wird.

Als Trenneinrichtung ist bevorzugt ein Lochblech vorgesehen. Als Alternative kann als Trenneinrichtung jedoch auch ein Schlitzsieb, ein Maschen- oder Gittersieb vorgesehen sein. Hierbei kann das Maschensieb aus Kunststoff und/oder Metall hergestellt sein.

Versuche haben gezeigt, dass als Trenneinrichtung für die Grobsortierung Schlitze besonders geeignet sind, die mehr als 2 mm lang und weniger als 1,2 mm, vorzugsweise weniger als 0,3 mm breit sind.

Insbesondere bei einem Bodenblech ist es vorteilhaft, wenn die Schlitze eine Längsachse aufweisen, die auf einer Geraden liegt, die einer Tangente zur Rotorbewegung entspricht. Wenn die Rotorbewegung als Pfeilrichtung dargestellt wird, liegt die Ausrichtung der Schlitze somit etwa in Pfeilrichtung. Genauere Untersuchungen haben jedoch gezeigt, dass eine Ausrichtung der Schlitze genau in Ausrichtung einer Tangente zur Rotorbewegung nicht die optimale Schlitzausrichtung darstellt. Daher wird vorgeschlagen, dass als Trenneinrichtung Schlitze vorgesehen sind, deren Längsachse auf einer Geraden liegt, die in einem waagerechten Sektor von +/- 45° zu einer Tangente zur Rotorbewegung verläuft. Vorteilhafte Ergebnisse lassen sich bereits bei einer Abweichung von +/- 5° zur Tangente zur Rotorbewegung erzielen.

Ein entsprechender Effekt lässt sich an senkrecht angeordneten Trenneinrichtungen beobachten. Auch hier sind Schlitze vorteilhaft, deren Längsachse auf einer Geraden liegt, die einer Tangente zur Rotorbewegung an einer senkrechten Trenneinrichtungswandung entspricht. Daher wird vorgeschlagen, dass die Schlitze auch eine Längsachse aufweisen können, die auf einer Geraden liegt, die in einem senkrechten Sektor von +/- 45° zu einer Tangente zur Rotorbewegung verläuft. Auch hier zeigen bereits Abweichungen von +/- 5° vorteilhafte Ergebnisse.

Die Schrauben können auch als Flüssigkeitsleiteinrichtung verwendet werden. Daher wird vorgeschlagen, dass mindestens eine der Schrauben ein Maschen- oder Gittersieb aufweist. Durch diese Schrauben kann Flüssigkeit eingebracht werden. Sie dienen aber vor allem dazu, Flüssigkeit abzusaugen.

Dies ermöglicht es weiter, dass mindestens eine der Schrauben einen Hohlkörper aufweist und als Trenneinrichtung ausgebildet ist.

Eine besonders bevorzugte Ausführungsvariante sieht vor, dass eine große Spirale als Verdrängerspirale im radial äußeren Bereich ein nach oben weisendes Ende aufweist. Dies ist insbesondere bei korbartigen Trenneinrichtungen von Vorteil.

Es hat sich herausgestellt, dass vorteilhafte Ergebnisse insbesondere dann erzielt werden, wenn die Verdrängerspirale wenigstens 3 und vorzugsweise 5 Spiralarme aufweist.

Ein besonderer Faserstoffrückgewinnungsgrad und eine besondere Faserstoffqualität wird dadurch erzielt, dass der Durchmesser des unteren Bereichs mindestens doppelt so groß und vorzugsweise mindestens dreimal so groß wie der Durchmesser des oberen Bereiches ist.

Um eine kontinuierliche Bearbeitung zu ermöglichen, wird vorgeschlagen, dass der Zugang für Stoffe eine Zuführung unter Überdruck ermöglicht. Dadurch wird ein besonders großer Durchsatz erzielt. Außerdem hat sich gezeigt, dass durch den Überdruck das Einziehen von Luft vermieden werden kann und die Schaumbildung reduziert wird.

Wenn das geschlossene Gefäß lose Körper aus Kunststoff aufweist, können diese Körper für einen Deinking-Prozess Farbe aufnehmen. Alternativ oder kumulativ können sie auch als Mahlkörper dienen. Erfindungsgemäß ist ein Verfahren zum Betrieb eines solchen Aufbereiters, bei dem in einem Pulper mit einem ersten Lochblech Stoffe fließfähig gemacht werden, die größeren Bestandteile aussortiert werden, leicht zerfaserbare Bestandteile durch das Lochblech abgeführt werden und die größeren Bestandteile einem ersten Aufbereiter zugeführt werden, in dem sie mit einem zweiten Lochblech, das einen kleineren Lochdurchmesser als das erste Lochblech hat, getrennt werden dabei in dem ersten Aufbereiter im kontinuierlichen Betrieb Langstoffe und Begleitstoffe getrennt werden und die Begleitstoffe in einem zweiten Aufbereiter chargenweise behandelt werden, wobei im zweiten Aufbereiter Langstoffe abgetrennt werden und Begleitstoffe aus dem zweiten Aufbereiter über einen Puffer dem zweiten Aufbereiter wieder zugeführt werden, wobei nach einer Behandlungsdauer die Begleitstoffe aus dem Kreislauf ausgeschleust werden.

Hierzu wird vorgeschlagen, dass das erste Lochblech 10 mm oder weniger Lochdurchmesser und das zweite Lochblech einen kleineren Lochdurchmesser als das erste Lochblech von 2 bis 5 mm hat.

Die größeren Stoffe können dabei schwer zerfaserbare Stoffe und Begleitstoffe sein, die vorzugsweise über eine Pumpe vom Pulper in den Aufbereiter übeiführt werden. Dabei können beispielsweise etwa 70 % (zwischen 50 und 90 %) der Stoffe über den Pulper laufen, während etwa 30 % (zwischen 10 und 50 %) dem Aufbereiter zugeführt werden. Der dem Aufbereiter entnommene Langstoff kann entweder separat verwertet werden oder den dem Pulper entnommen Fasern vorzugsweise nach einer Grobsortierung zugegeben werden.

Verschiedene Funktionen und Einsatzmöglichkeiten des Aufbereiters sind in der Zeichnung dargestellt und werden im Folgenden näher beschrieben. Es zeigt
- Figur 1: den prinzipiellen Aufbau des Aufbereiters am Beispiel eines Suspendierungsprozesses,
- Figur 2: den in Figur 1 gezeigten Aufbereiter am Beispiel eines Drucksortierungsprozesses,
- Figur 3: den in Figur 1 gezeigten Aufbereiter für eine Endstufensortierung,
- Figur 4: den in Figur 1 gezeigten Aufbereiter eine Fraktionierung,
- Figur 5: den in Figur 1 gezeigten Aufbereiter für eine Mahlung,
- Figur 6: den in Figur 1 gezeigten Aufbereiter für eine Dispergierung,
- Figur 7: die Freifaserstoffdichte als Schnitzelgehalt über der Zeit,
- Figur 8: eine Aufbereiterschaltung für eine Anwendung des Aufbereiters als Pulperentsorger,
- Figur 9: eine Aufbereiterschaltung für eine Anwendung des Aufbereiters als Feinsortierer,
- Figur 10: eine Aufbereiterschaltung für eine Anwendung des Aufbereiters für nassfest-Gautschbruch,
- Figur 11: eine Aufbereiterschaltung für eine vollkontinuierliche Pulperentsorgung
- Figur 12: eine Aufbereiterschaltung für eine Anwendung des Aufbereiters als Komplettaufbereiter,
- Figur 13: einen Aufbereiter für Altpapier und
- Figur 14: einen Aufbereiter mit mehreren seitlichen Kammern.

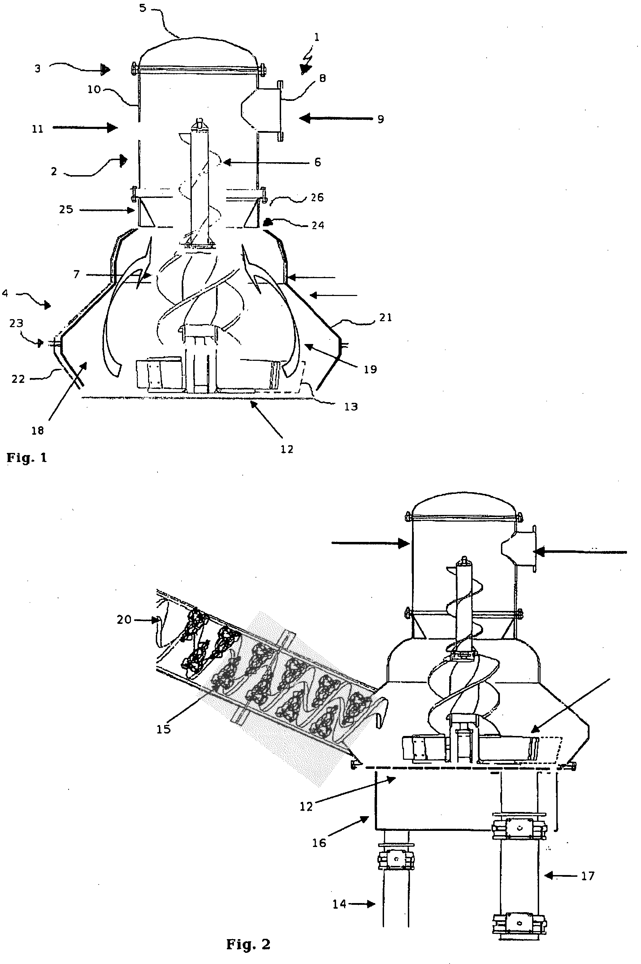

Der in Figur 1 gezeigte Aufbereiter 1 dient der Suspendierung von Schnipseln in Anwesenheit von Begleitstoffen. Dazu hat der Aufbereiter ein geschlossenes Gefäß 2, das einen oberen Bereich 3 aufweist, der einen kleineren Durchmesser als der untere Bereich 4 hat. Im oberen Bereich 3 ist ein Deckel 5 vorgesehen, der das Gefäß 2 luftdicht abschließen kann und es erlaubt, das Gefäß 2 unter Druck zu setzen.

Im oberen Bereich 3 ist eine kleine Schraube 6 und im unteren Bereich 4 eine große Schraube 7 angeordnet. Der obere Bereich 4 hat einen ersten Zugang 8 für Stoffe 9 und einen zweiten Zugang 10 für Wasser 11.

Am unteren Ende des unteren Bereiches 4 ist eine Trenneinrichtung 12 vorgesehen, über der eine Verdrängerspirale 13 angeordnet ist. Unterhalb dieser Trenneinrichtung 12 befindet sich der Ausgang 14 für Freifaserstoff und gelöste Stoffe. Dieser Ausgang 14 und ein davor geschalteter Stoffsammler 16 sind in Figur 2 gezeigt. Außerdem zeigt Figur 2 einen Schwerteilefang 17.

Die Pfeile 18 und 19 in Figur 1 zeigen, wie Schnipsel, Begleitstoffe und Freifaserstoff umgewälzt werden, sodass die Begleitstoffe über die Austragswendel 15 ausgetragen werden. Letztlich verlassen Freifaserstoff und gelöste Stoffe über den Ausgang 14 den Aufbereiter 1, während die Begleitstoffe 20 den Aufbereiter über die Austragswendel 15 verlassen.

Der Aufbereiter 1 ist aus mehreren Teilen zusammengesetzt. Der untere Bereich 4 besteht aus einen Oberteil 21 und einen Unterteil 22, die in einen radial äußeren Bereich 23 lösbar miteinander verbunden sind. An einem oberen Ende 24 des unteren Bereiches 4 ist ein Kragen 25, an dessen oberem Ende 26 der obere Bereich 3 über einen Flansch befestigt ist.

Die Trenneinrichtung 12 ist im vorliegenden Fall ein Lochblech. Sie kann jedoch auch durch ein Maschen- oder Gittersieb aus Kunststoff oder Metall ausgebildet sein.

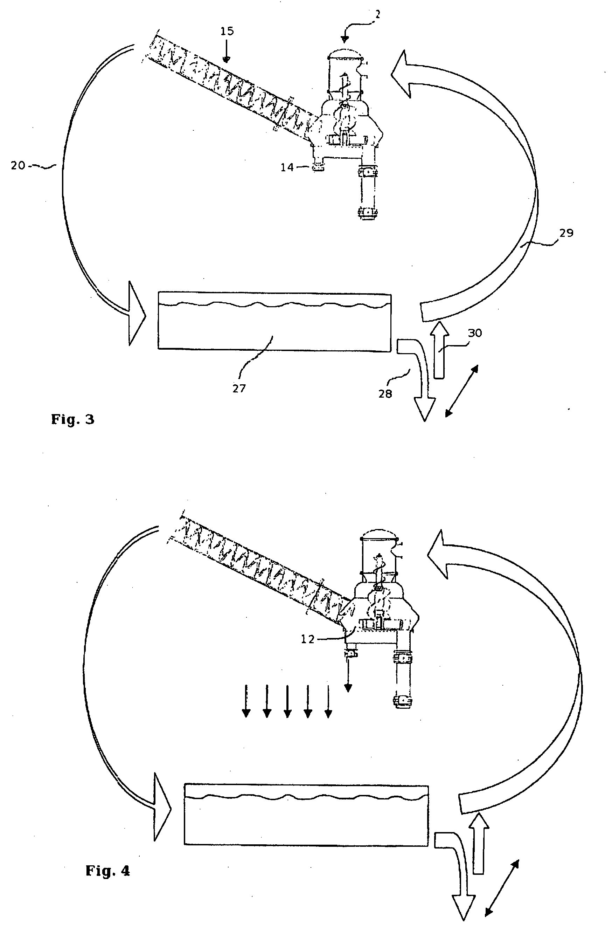

Während die Figur 1 die Verwendung des Aufbereiters zur Suspendierung zeigt und die Figur 2 eine Drucksortierung zeigt, zeigt die Figur 3 eine Endstufensoitierung und die Figur 4 eine Fraktionierung. Bei der in Figur 3 gezeigten Endstufensortierung gelangen die Ausgangsstoffe 30 entsprechend dem Pfeil 29 in den Aufbereiter und werden dort gewaschen. Danach wird über die Austragswendel 15 entspechend dem Pfeil 20 der Pufferbehälter 27 befüllt. In einem mehrstufigen Prozess wird der Aufbereiter so lange durchlaufen bis am Ausgang 14 nur noch sehr wenig Faserstoff entnommen werden kann, Dann wird mit neuen Ausgangsstoffen begonnen. Dafür wird der Aufbereiter erst entleert und dann mit neuen Ausgangsstoffen befüllt. Wenn der Pufferbehälter 27 als First in/ First out Behälter verwendet wird, kann der Aufbereiter bereits neue Ausgangsstoffe bearbeiten, während der Pufferbehälter noch zum Austragspfeil 28 leer geschoben wird. Bei der Aufbereitung von Getränkeverpackungen wird aus den Schnipseln zuerst im Aufbereiter der Schmutz ausgewaschen. Beim folgenden Verfahrensschritt werden die Schnipsel aufgeschlossen und die Fasern werden herausgewaschen. Bei der Aufbereitung von Spuckstoff wird zuerst der Fasestoff als Kurzstoff herausgewaschen und dann wir im Aufbereiter suspendiert um Fasern, insbesondere Langfasern, herauszuwaschen.

In Figur 4 ist angedeutet, dass der Behälter 2 durch eine spezielle Ausbildung der Trenneinrichtung 12 mit unterschiedlichen Schlitzgrößen und unterschiedlichen nachgeschalteten Bereichen so ausgebildet sein kann, dass Faserstoffe in unterschiedlichen Faserstofffraktionen entnommen werden können. Die Trenneinrichtung mit nachgeschalteten Entnahmestellen kann so ausgebildet sein, dass lange und kurze Fasern in unterschiedlichen Faserlängenfraktionen den Behälter verlassen. Im Übrigen entspricht der in Figur 4 gezeigte Kreislauf dem in Figur 3 gezeigten Kreislauf.

Bei der Behandlung von Rejekten von Altpapier wurde die Druckerschwärze bisher chemisch gelöst, agglomeriert und abgeschöpft. Vorteilhaft ist es, wenn die Rejekte, die Fasern enthalten, desagglomeriert und entascht werden, um die Fasern zu gewinnen und den Rest zu entsorgen. Der agglomerierte Krümmelstoff kann mit wenig Wasser auf einem Lochblech mit z.B. 2 bis 2,5 mm im Aufbereiter behandelt werden. Dabei bildet sich auf der Oberseite des behandelten Krümmelstoffes eine weiße Schicht und die schwarzen Farbpigmente wandern nach unten zum Lochblech. Die Farbpigmente und die Füllstoffe werden im Aufbereiter ausgewaschen. Die Füllstoffe bilden eine weiße Schicht auf der Oberfläche und die schwarzen Farbpigmente wandern als Schlamm nach unten. Dadurch wird ein Prozess zum Waschdeinken mit wenig Wasser zur Verfügung gestellt, bei dem beispielsweise 10 l Krümmelstoff mit 10 bis 15 % Stoffdichte umgewälzt werden. Dadurch können etwa 300 l pro Stunde bearbeitet werden. Insbesondere zum Deinken eignet sich ein Maschensieb im Aufbereiter an Stelle eines Lochbleches.

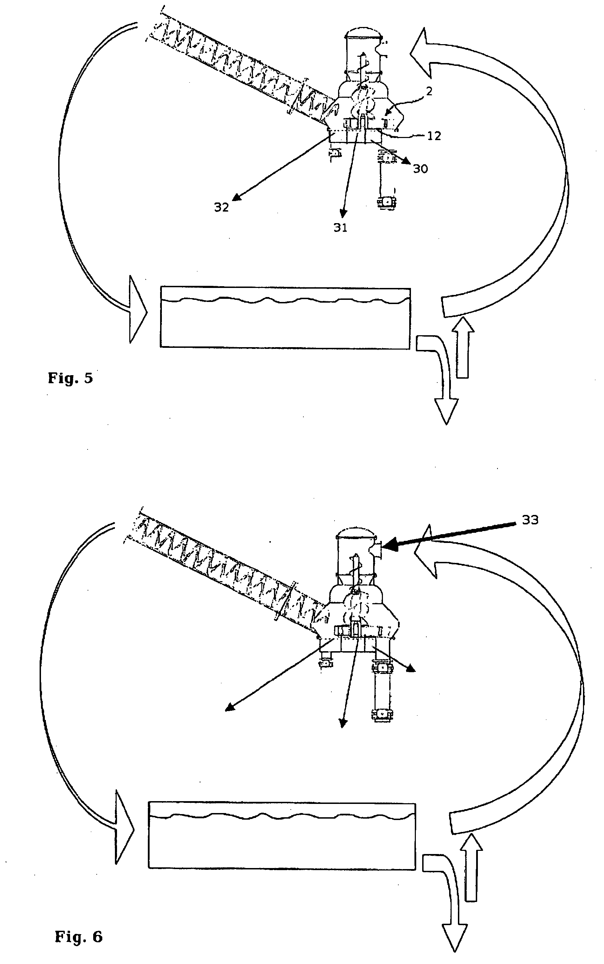

Die Verwendung des Aufbereiters für eine Mahlung ist in Figur 5 gezeigt. Dort wirkt der Aufbereiter als Kugelmühle, da im Ausgangsmaterial Kugeln enthalten sind, die als Mahlkörper dienen. Unter der Trenneinrichtung 12 ist eine erste Kammer 30 vorgesehen, über die Kugeln aus dem Behälter 2 entnommen werden können. Hierzu ist oberhalb der Kammer 30 eine Trenneinrichtung mit größeren Öffnungen, wie beispielsweise mit Löchern mit 6 mm Durchmesser, vorgesehen. Bei Öffnung dieser Kammer können Kugeln aus dem Behälter 2 in die Kammer 30 gelangen und von dort weiterverwendet werden.

Neben der Kammer 30 ist eine Kammer 31 vorgesehen, die als an beliebiger Stelle anordenbare weitere Kammer zur Aufnahme von Faserstoff dient. Hierzu ist beispielsweise über der Kammer 31 eine Trenneinrichtung mit Löchern mit einem Durchmesser von 1,5 mm vorgesehen. Schließlich ist als dritte Kammer eine Kammer 32 vorgesehen, die als Trenneinrichtung ein Blech mit Löchern von 1 mm Durchmesser aufweist und Kugelbruch aufnimmt.

Ein besonders bevorzugtes Verfahren sieht vor, dass der Aufbereiter mit einer Stoff/Kugelmischung befüllt wird. Der Aufbereiter wird zuerst im Kreislauf gefahren und es werden ihm über eine erste Kammer Wasser, Kugelbruch und Feinstoff entzogen. Die Fasern reichern sich dadurch im Aufbereiter an und der Stoff wird eingedickt. Dann wird der Ausgang über die erste Kammer geschlossen und im Kreislauf mit viel zugeführtem Wasser gefahren. Dabei wird eine andere Kammer geöffnet, um Faserstoff zu entziehen. Der Mahlprozess wird dadurch abgebrochen und es werden viele Fasern ausgewaschen. Dann wird auch die andere Kammer geschlossen und es werden die Kugeln entnommen. Die Begleitstoffe werden dann über den Begleitstoffaustrag 15 und den Puffer 27 entfernt.

Die Figur 5 zeigt somit einen Aufbereiter, der als Mahleinrichtung dient und bei dem unter der Trenneinrichtung 12 verschiedene Kammern 30, 31, 32 für verschiedene Fraktionen vorgesehen sind. Entsprechend ist auch der in Figur 4 gezeigte Aufbereiter ausgebildet, um mit speziell angepassten Trenneinrichtungsabmessungen eine Fraktionierung zu erzielen.

Die Figur 6 zeigt, wie durch die zusätzliche Zugabe von Dampf 33 bei einer Anordnung, wie der in Figur 5 gezeigten, auch eine Dispergierung durchgeführt werden kann.

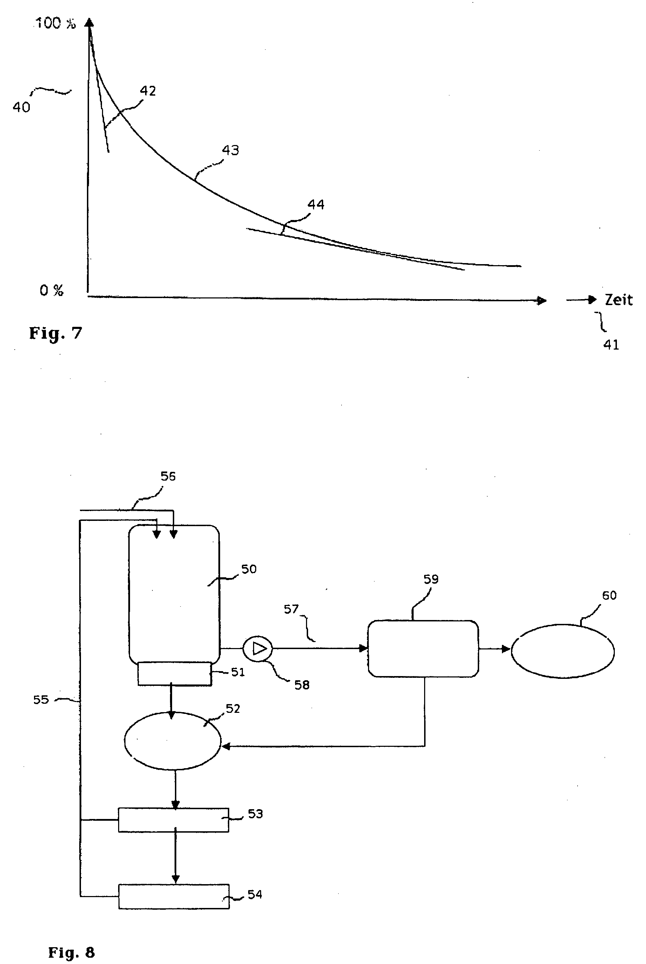

Die Figur 7 zeigt die Veränderung der Freifaserstoffdichte bei einer Behandlung von Faserstoff im Bearbeitungsprozess. Dabei ist der Schnipselgehalt 40 über der Zeit 41 aufgetragen. Nach kurzer Zeit liegt der Schnipselgehalt noch sehr hoch und die Steigung der Tangente 42 an der Kurve 43 ist bei etwa 90 % Schnipselgehalt noch sehr steil. Das heißt der Schnipselgehalt nimmt am Anfang sehr stark ab. Die Steigung 44 bei etwa 10 % Schnipselgehalt an der Kurve 43 ist bereits sehr flach und zeigt, dass nach einer Zerfaserung eines Großteils der Schnipsel die Dauer für eine weitere Zerfaserung immer länger wird. Das heißt solange bei hohem Schnipselgehalt gearbeitet wird, ergibt sich auch eine besonders hohe Zerfaserungsleistung. Der Aufbereiter sollte daher bei Abzug der Freifasern möglichst in dem Bereich der Tangente 42 bei etwa 90 % Schnipselgehalt gefahren werden. Vorteilhaft ist eine Fahrweise im Bereich zwischen 70 und 95 % Schnipselgehalt.

Der Aufbereiter kann entsprechend Figur 2 vollkontinuierlich betrieben werden. Dabei werden kontinuierlich Stoffe 9 und Wasser 11 zugeführt und es werden kontinuierlich Schwerteile am Schwerteilefang 17, Faserstoffe am Ausgang 15 und Begleitstoffe 20 aus dem Aufbereiter entfernt. In der Praxis hat sich eine Batchbetriebsweise als mögliche Alternative zum Chargenbetrieb herausgestellt. Hierbei wird Stoff 9 und Wasser 11 solange zugeführt bis ein oberes Niveau etwa im Bereich des Kragens 25 erreicht wird. Der Aufbereiter wird dann solange gefahren bis das Niveau in den Bereich der Höhe der Verdrängerspirale 13 abgesunken ist.

Besonders vorteilhaft ist jedoch der in den Figuren 3 bis 6 gezeigte Chargenbetrieb mit Puffer- und Begleitstoffrückführsystem.

Eine Verwendung des Aufbereiters als Pulperentsorger ist in Figur 8 gezeigt. Aus einem Pulper 50 wird als Unterkorn 51 Faserstoff 52 entnommen, einer Sortierung 53 und schließlich einer Papiermaschine 54 zugeführt. Von der Sortierung 53 oder einer Aufbereitung und von der Papiermaschine 54 gelangt das Rückwasser 55 wieder in den Pulper 50 zur Bearbeitung des dem Pulper 50 zugeführten Altpapiers 56.

Das Oberkorn 57 des Pulpers 50 wird über die Grobstoffpumpe 58 dem Aufbereiter 59 zugeführt, der das Oberkorn in Faserstoff 52 und Begleitstoffe 60 trennt. Besonders vorteilhaft ist hierbei die Aufwertung des Pulpers zum Fraktionierer. Der vorgeschaltete Pulper 50 zerfasert ledigich den Kurzstoff, wohingegen die schwer zerfaserbaren Langstoffe dem Aufbereiter 59 übergeben werden und vorwärts sortiert werden, d.h. nicht mehr in den Pulper 50 gelangen. In einem Ausführungsbeispiel besteht die Sortierung 53 aus einer Grobsortierung und einer Feinsortierung, bei denen jeweils Rejekte aussortiert werden. Die dem Aufbereiter entnommen Faserstoffe werden dann nach der Grobsortierung und vor der Feinsortierung dem Stoffstrom vom Pulper 50 zur Papiermaschine 54 zugegeben.

An Stelle des Pulpers 50 kann auch eine Siebtrommel verwendet werden. Am Eingang am oberen Ende einer schrägen Trommel wird der Ausgangsstoff zugegeben. Der Ausgangsstoff wird dann beim Durchlaufen der Trommel zuerst mit viel Wasser behandelt, um kurze Fasern zu entfernen. Dann wird in der Nähe des Ausgangs weniger Wasser zugegeben, um längere Fasern zu entfernen. Dadurch ist der Ausgangsstoff am Ende der Trommel relativ trocken, obwohl ihm in der Trommel Wasser zugegeben wurde.

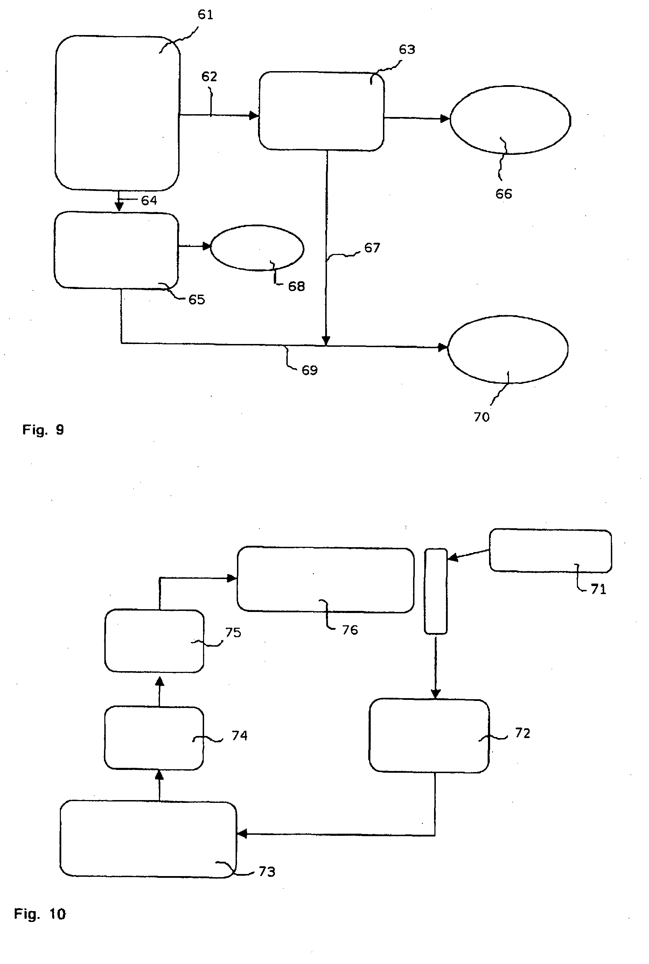

Eine Anwendung des Aufbereiters als Drucksortierer ist in Figur 9 gezeigt. Dort wird ein Pulper 61 mit einem Lochblech mit beispielsweise 100 mm Durchlassöffnungen eingesetzt. Das Oberkorn 62 wird einem ersten Aufbereiter 63 zugeführt, während das Unterkorn 64 einem zweiten Aufbereiter 65 zugeführt wird. Dieser zweite Aufbereiter hat ein Schlitzblech mit einer Schlitzbreite (oder Länge) von beispielsweise 0,2 bis 1,2 mm.

Während der erste Aufbereiter 63 große Begleitstoffe 66 von Faserstoff 67 trennt, trennt der zweite Aufbereiter 65 kleine Begleitstoffe 68 von Faserstoff 69. Die Faserstoffe 67 und 69 können anschließend zusammen als Gesamtfaserstoff 70 weiterbehandelt werden.

Die Verwendung des Aufbereiters für Nassfest-Gautchbruch oder Trockenausschuss ist in Figur 10 gezeigt. Dort wird von einem Gautchbruchpulper 71 Gautchbruch einem Aufbereiter zugeführt. Nach Abtrennung der Begleitstoffe werden die Faserstoffe des Aufbereiters 72 einer Altpapieraufbereitung 73 zugeführt, von dort wandern die Faserstoffe in einen Eindicker 74, zur Maschinenbütte 75 und schließlich auf die Siebpartie 76.

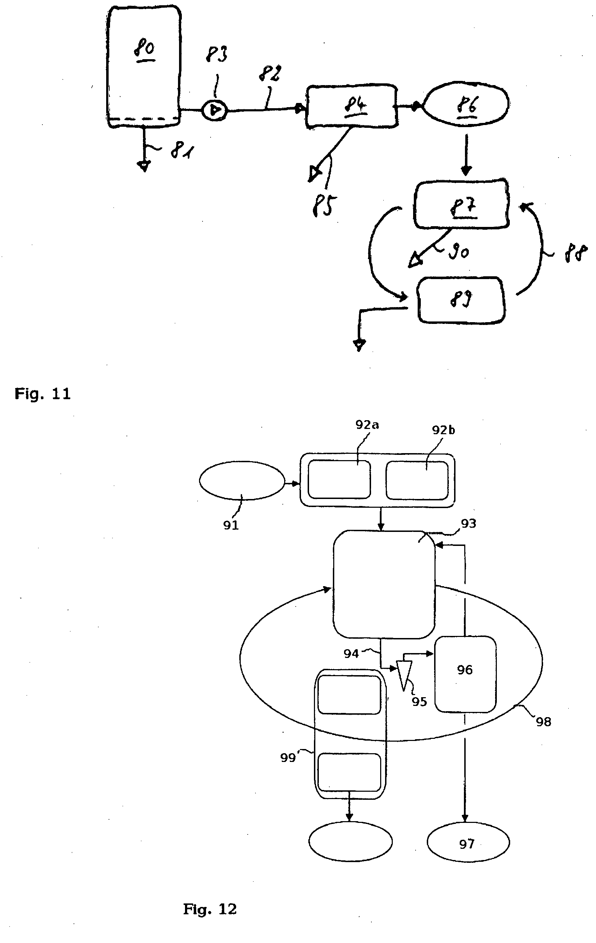

Die Figur 11 zeigt schließlich eine vollkontinuierliche Entsorgung der aus einem Pulper abgepumpten Ausgangsstoffe. Im Pulper 80 werden etwa 96 % Fasern und 4 % Begleitstoffe auf einem Lochblech mit 8 mm Durchgangsöffnungen behandelt. Der Kurzstoff 81 wird unter dem Sieb abgezogen und der Rest dient als Ausgangsstoff 82 der mit einer Pumpe 83 in den ersten Aufbereiter 84 gepumpt wird. Diesem ersten Auf bereiter 84 werden getrennt Langstoffe 85 und Begleitstoffe 86 entnommen. Die Begleitstoffe gelangen als Rejekte 86 in einen zweiten Aufbereiter 87, aus dem Begleitstof fe 88 entnommen werden und über einen Puffer 89 dem zweiten Aufbereiter 87 wieder zugeführt werden. Im zweiten Aufbereiter werden Langstoffe 90 abgetrennt.

Der Puffer 89 dient dazu, die im Kreislauf geführten Begleitstoffe 88 nach einer entsprechenden Behandlungsdauer aufzunehmen und aus dem Kreislauf auszuschleusen. Während noch Begleitstoffe 88 dem Puffer zugeführt werden können bereits neue Rejekte 86 dem zweiten Aufbereiter 87 zugeführt werden.

Die Figur 12 zeigt wie Ausgangsstoffe 91 einem Zwei-Puffer-System 92a und 92b zugegeben werden. Dies ermöglicht es, den einen Puffer 92a noch zu befüllen, während der andere Puffer 92b entleert wird. Im Aufbereiter 93 wird über einen Schlitzkorb mit 0,2 mm Faserstoff 94 abgetrennt, der in einem Hydrozyklon 95 entsandet wird. Der Faserstoff 94 gelangt dann in einen Eindicker 96, von dem der flüssige Anteil in den Aufbereiter 93 gelangt, während die feste Phase über einen Kompaktor (nicht gezeigt) als fester Faserblock 97 zur Verfügung gestellt wird. Wie auch in Figur 11 gezeigt, werden die im Kreislauf geführten Begleitstoffe 98 nach einer entsprechenden Behandlungsdauer über den Puffer 99 ausgeschleust und gegebenenfalls mit einem Kompaktor (nicht gezeigt) nachbehandelt. Die Begleitstoffe 98 werden vorzugsweise so lange im Kreislauf geführt bis im Aufbereiter 93 im Wesentlichen nur noch Begleitstoffe ohne Fasen sind.

Bei geeigneter Prozessführung und dem Einsatz schwer zerfaserbarer Faserstoffe, wie z.B. Nassfestpapieren (z.B. Etiketten) verlässt die Druckerschwärze als Erstes den Aufbereiter, also bevor die hellen Fasern als Freifasern die Löcher/Schlitze passieren.

Hierfür empfiehlt sich der Einsatz von Maschensieben statt Loch-/Schlitzsieben. Derartige Siebe mit nahezu beliebigen Maschenweiten haben die Eigenschaft auch Freifasern zurückzuhalten. Dadurch ergibt sich die Möglichkeit, Druckerschwärze auch aus leicht zerfaserbaren Faserstoffen (Zeitungen und Illustrierten) herauszuwaschen. In einem ersten Schritt trennt man dabei mit Loch-/Schlitzsieben den leicht zerfaserbaren Faserstoff vom weniger leicht zerfaserbaren Faserstoff (braune Fraktionen, insbesondere Natronpapier) ab - incl. der Mineralölbestandteile.

Beim Deinkingprozess kann man auch entsprechende Additive zusetzen (Chemikalien wie z.B. Natronlauge oder Peroxid). Die Chemikalien läßt man zuerst einwirken, um sie danach auszuschwemmen.

Der Aufbereiter wird somit zum Faserstoffwäscher und dient der Weißgradsteigerung.

Dabei kann man den Rotor selbst als Entwässerer ausgestalten. D.h. er erhält eine Hohlstruktur mit Siebbespannung. Zur Freihaltung der Siebe des Rotors sollte der Rotor (Bodenspirale + Seitenflügel) einen sehr kleinen Abstand zu den Sieben des Bodens und der Seiten haben.

Der Aufbereiter kann somit entweder mit relativ dickem Faserstoff und Schlitzblechen oder dünnflüssiger mit einem Maschensieb gefahren werden. Die Schlitzbleche ermöglichen perforierte Bleche mit feinen gelagerten Löchern oder Schlitzen. Die Maschensiebe ermöglichen sehr feine Durchlassöffnungen mit einem Durchmesser von einigen µm bis zu wenigen Milimetern.

Der Aufbereiter mit Siebgewebe kann natürlich auch eindicken - d.h. das Wasser entfernen. Dabei werden auch die gelösten Stoffe sowie die Kolloide und Füll- und Feinstoffe und Nullfasern herausgewaschen.

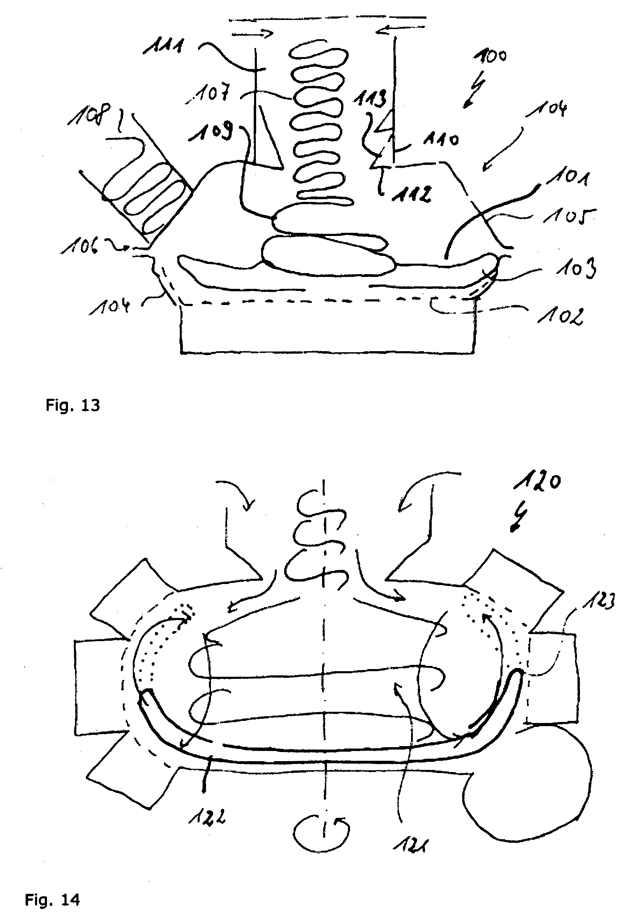

Der in Figur 13 gezeigte Aufbereiter 100 wird vorzugsweise als Altpapieraufbereiter verwendet. Er hat nur eine Spirale 101, die jedoch 5 Arme aufweist. Unter der Spirale 101 ist eine große Siebfläche 102, die radial außen auch noch nach oben gezogen sein kann. Die Enden 103 der Spirale 101 sind radial außen etwas hochgezogen. Der untere Bereich 104 des Aufbereiters 100 weist ein Oberteil 105 und ein Unterteil 104 auf, die in einem radial äußeren Bereich 106 lösbar miteinander verbunden sind. Die Verbindung erfolgt über Flansche und Schrauben am radial äußersten Rand des unteren Bereiches. Die radialen Enden 103 der Spirale 101 erstrecken sich bis zum radial äußeren Bereich 106. Dadurch kann eine schmale hochgezogene Spirale eingesetzt werden. Vorteilhaft sind eine stabile Mischerschnecke 107 oberhalb einer Schraube 109 und eine gedrängte Bauweise. Die Schraube 109 hat einen relativ großen Innendurchmesser. Beispielsweise ist der Innendurchmesser etwa halb so groß wie der Außendurchmesser. Dadurch entsteht eine freie Durchgangsfläche innerhalb der Schraube mit einem Querschnitt von der Hälfte des Außendurchmessers der Schraube. Der relative Innendurchmesser kann auch relativ noch größer sein. Beispielsweise bei einer Schraube 109 mit einem Außendurchmesser von 120 cm kann der Innendurchmesser 100 cm sein. Die Schraube mit dem freien Innendurchmesser ermöglicht es, durch eine sogenannte hohle Schraube den Stoff in Umfangsrichtung über eine besonders große Siebfläche zu bewegen, ohne besonders viel Volumen in senkrechter Richtung zu bewegen.

Das Oberteil 105 hat einen Kragen 110, der in einen Zuführbereich 111 überleitet. Dieser Kragen 110 hat eine oder mehrere Einschnürungen 112, die schräge Flächen 113 aufweisen, die ein Zuströmen aus dem Zuführbereich 111 in den unteren Bereich 112 ermöglichen aber einen Rückfluss in entgegen gesetzter Richtung behindern.

Außerdem wird der Begleitstoffausgang 108 zumindest oberhalb des unteren Bereiches 104 angeordnet, um im Aufbereiter einen Druck zu gewährleisten.Die schrägen Flächen können sich spiralförmig im Kragenbereich erstrecken, um dem zugeführten Material einen Drall zu geben, der vorzugsweise der Drehrichtung der Mischerschnecke entspricht. Der Drall kann aber auch gegenläufig sein, um bereits in diesem Bereich eine besondere Friktion zu erreichen.

Altpapier unterscheidet sich von schwer zerfaserbarem Papierrohstoff dadurch, dass dieser Faserstoff eine nur geringe Zerfaserungsresistenz besitzt.

Der beschriebene Aufbereiter bietet nun die Möglichkeit, leicht zerfaserbare Faserstoffe in großer Menge aufzubereiten. Der Aufbereiter sollte unter Gegendruck betrieben werden, da sonst im Lochblech Kavitation entsteht. Kavitation führt zur Bildung von Wasserdampfbläschen, welche das Sieb unpassierbar macht.

Überdruck führt zu Wasserflüssen an beiden Öffnungen des Systems - dem Begleitstoffausgang 108 und dem Materialzufuhrsystem. Deshalb führt man das Wasser gezielt ab - unter Zurückhaltung der Begleitstoffe bzw. des Altpapiers - und pumpt es in die Eingangsleitung zurück. Der gezielte Rückfluss im Zuführsystem beinhaltet eine Füllstandsregelung im Zuführtrichter. Ein gewisser Druck am Begleitstoffaustrag und bei der Materialzuführung kann durch hoch gezogene Leitungen erzeugt werden, die durch das in der Leitung stehende Wasser zu einem Druck im System führen. Eine vorteilhafte Druckerhöhung kann auch durch "Stopfen" erzielt werden. Dabei wird das Material in der Leitung so komprimiert, dass beim Zuführen des Materials der Druck im Aufbereiter erhöht wird und beim Abführen der Begleitstoffe ein Entweichen von Wasser und damit eine Reduktion des Druckes im Aufbereiter behindert wird.

Im Begleitstoff-System sorgt ein Entwässerungsystem für einen ausreichenden Wasserrückfluss. Darüber hinaus sorgt eine Überlaufregelung dafür, dass nicht zuviel Wasser zurückgeführt wird, d.h. dem Aufbereiter entzogen wird.

So kann man einen nahezu beliebig hohen Druck im Reaktor erzeugen und demzufolge auch eine sehr hohe Produktion von Freifaserstoff zulassen, ohne dass das Sieb zugeht. Begrenzt lediglich durch den rheologischen Übergang von laminarer in turbulente Strömung, die zu unbeherrschbarer Druckerhöhung führen würde.

Die Einfachheit des Aufbereiters zeichnet sich auch dadurch aus, dass er statt der bekannten tangentialen (zweigeteilten), eine einzige mehr oder weniger vertikale Begleitstoffaustragswendel aufweist. Dadurch ist die Möglichkeit gegeben, den unteren Konus klein (niedrig) zu halten und somit einen großen Lochplattendurchmesser mit viel freier Siebfläche zu ermöglichen. Die Spiralarme reichen bis zum größten Durchmesser, sind flach gehalten und werden mit mehr als drei Armen ausgestattet, insbesondere mit 5 oder gar 7. Dies führt zu einer intensiven Fegearbeit selbst bei niedrigen Umfangsgeschwindigkeiten bzw. Drehzahlen.

Wesentlich ist die von der runden Form abweichende Form mit relativ scharfen Übergängen, die den Stofffluss auch bei höchsten Gesamtstoffdichten garantiert. Daher weist der untere Bereich 104 im gezeigten Schnitt Kanten mit stumpfen Winkeln auf, an denen der Stoff gebrochen wird. Der Soff verliert dadurch den inneren Zusammenhalt und erst hierdurch ist die Umlenkbarkeit gegeben trotz extrem hoher innerer Reibung.

Altpapier zeichnet sich durch einen geringen spezifischen Zerfaserungswiderstand aus. Demzufolge produziert ein Altpapieraufbereiter wie er oben beschrieben ist bei gegebenen Abmessungen bezogen auf das effektive Reaktorvolumen viel Faserstoff. Man muss nun dafür sorgen, dass dieser Faserstoff mittels eines relativ großen Wasserflusses den Reaktor verlassen kann, ohne die Siebe zu verlegen.

Einen weiteren Aufbau eines Aufbereiters 120 zeigt die Figur 14. Dieser Aufbereiter ist insbesondere für Altpapier geeignet und hat viele Vorteile.

Erstens: Der große freie innere Durchmesser der Umwälzschraube 121, die wie die Schraube 109 hohl ausgebildet ist, nimmt relativ viel Raum ein und bewirkt eine stark verringerte Zerfaserungsleistung - bezogen auf die äußeren Abmessungen des Aufbereiters.

Zweitens verfügt die Bodenspirale 122 über eine vergleichsweise geringe Höhe (weniger als die Hälfte der Höhe des unteren Bereiches des Pulpers) und somit eine geringe Umwälzleistung. Je nach Anforderungsprofil kann die Bodenspirale aber auch an ihrem radialen Ende hoch gezogen werden (punktierte Linie), um die Umwälzleistung oder die Partikelführung zu verändern. Der Siebkorb 123 ist im Ausführungsbeispiel im Wesentlichen in den radial äußeren Bereichen angeordnet. Er sich kann aber auch wie ein Korb zusätzlich über die Bodenfläche erstrecken. Da der Abstand zwischen Umwälzschraube 121 und Siebkorb 123 relativ gering ist (weniger als die Hälfte des Radius der Schraube 121), bedarf es auch einer nur relativ geringen Umwälzleistung zur Aufrechterhaltung der Umwälzung, ohne dass es zur sog. Bankbildung (Strömungsblockade) kommt.

Drittens hält die hochgezogene Spirale das zylindrisch angeordnete Sieb frei. Dieses Sieb kann durchaus aus Schlitzen bestehen, die in einem zu optimierende Winkel zur axialen Richtung angeordnet sind. Also beispielsweise waagerechte Schlitze oder Schlitze, die an der senkrechten Wandung des Siebbleches diagonal verlaufen. Dies ermöglicht den Durchtritt der Fasern durch das Sieb ohne die sonst übliche Zurückhaltung der Langfasern. Vorteilhaft ist es beispielsweise, wenn die Schlitze etwa in Strömungsrichtung des Materials verlaufen.

Insgesamt gesehen führen die genannten Parameter dazu, dass beim Upscaling mit der Vergrößerung eines Aufbereiters durch die Wahl eines größeren Durchmessers sowie einer größeren Höhe der entstehende Faserstofffluss (bei gegebener Freifaserstoffdichte von z.B. 1 %) beherrscht wird, da die zur Verfügung stehende freie Loch/Schlitzfläche bezogen auf das Reaktorvolumen proportional anwächst.

## Patentansprüche

1. Aufbereiter (1) mit einem geschlossenen Gefäß (2) und mit einem oberen Bereich (3) mit einem ersten Durchmesser und einem unteren Bereich (4) mit einem zweiten Durchmesser größer als der erste Durchmesser, wobei der obere Bereich (3) eine erste Schraube (6) und der untere Bereich (4) eine zweite Schraube (7) mit einem Durchmesser größer als der der ersten Schraube aufweist, wobei im oberen Bereich (3) ein erster Zugang (8) für Stoffe (9) und ein zweiter Zugang (10) für Wasser (11) angeordnet sind, wobei oberhalb einer Trenneinrichtung (12) eine Austragswendel (15) und unterhalb der Trenneinrichtung (12) ein Ausgang (14) für Freifaserstoff und gelöste Stoffe angeordnet sind, ***dadurch gekennzeichnet, dass*** der untere Bereich (4) ein Oberteil (21) und ein Unterteil (22) aufweist, die in einem radial äußeren Bereich (23) lösbar miteinander verbunden sind.

2. Aufbereiter nach Anspruch 1, ***dadurch gekennzeichnet, dass*** am unteren Ende der zweiten Schraube (7) eine Spirale als Verdrängerspirale (13) angeordnet ist.

3. Aufbereiter nach einem der vorhergehenden Ansprüche, ***dadurch gekennzeichnet, dass*** im unteren Bereich (4) ein Schwerteilefang (17) angeordnet ist.

4. Aufbereiter nach einem der vorhergehenden Ansprüche, ***dadurch gekennzeichnet, dass*** der obere Bereich (3) vom unteren Bereich (4) trennbar ist.

5. Aufbereiter nach einem der vorhergehenden Ansprüche, **dadurch gekennzeichnet, dass** am oberen Ende (24) des unteren Bereiches (4) ein Kragen (25) angeordnet ist.

6. Aufbereiter nach einem der vorhergehenden Ansprüche, ***dadurch gekennzeichnet, dass*** als Trenneinrichtung (12) ein Lochblech vorgesehen ist.

7. Aufbereiter nach einem der vorhergehenden Ansprüche, ***dadurch gekennzeichnet, dass*** als Trenneinrichtung (12) Schlitze vorgesehen sind, die mehr als 2 mm lang und weniger als 1,2 mm, vorzugsweise weniger als 0,3 mm breit sind.

8. Aufbereiter nach einem der vorhergehenden Ansprüche, ***dadurch gekennzeichnet, dass*** als Trenneinrichtung (12) Schlitze vorgesehen sind, deren Längsachse auf einer Gerade liegt, die in einem waagerechten oder senkrechten Sektor von +/- 45° zu einer Tangente zur Rotorbewegung verläuft.

9. Aufbereiter nach einem der vorhergehenden Ansprüche 2-8, ***dadurch gekennzeichnet, dass*** die Verdrängerspirale (13) im radial äußeren Bereich ein nach oben weisendes Ende aufweist.

10. Aufbereiter nach einem der vorhergehenden Ansprüche 2-8, ***dadurch gekennzeichnet, dass*** die Verdrängerspirale (13) mindestens 3 und vorzugsweise 5 Spiralarme aufweist.

11. Aufbereiter nach einem der vorhergehenden Ansprüche, ***dadurch gekennzeichnet, dass*** der Durchmesser des unteren Bereiches (4) mindestens doppelt so groß und vorzugsweise mindestens drei mal so groß wie der Durchmesser des oberen Bereiches (3) ist.

12. Aufbereiter nach einem der vorhergehenden Ansprüche, ***dadurch gekennzeichnet*, *dass*** der Zugang (8) für Stoffe eine Zuführung unter Überdruck ermöglicht.

13. Aufbereiter nach einem der vorhergehenden Ansprüche, ***dadurch gekennzeichnet*, *dass*** das geschlossene Gefäß (2) lose Körper aus Kunststoff aufweist.

14. Verfahren zum Betrieb eines Aufbereiters (1) mit einem geschlossenen Gefäß (2) gemäß Anspruch 1, bei dem in einem Pulper (80) mit einem ersten Lochblech Stoffe (81) fließfähig gemacht werden, die größeren Bestandteile aussortiert werden, leicht zerfaserbare Bestandteile durch das Lochblech abgeführt werden und die größeren Bestandteile einem ersten Aufbereiter (84) zugeführt werden, in dem sie mit einem zweiten Lochblech, das einen kleineren Lochdurchmesser als das erste Lochblech hat, getrennt werden und bei dem in dem ersten Aufbereiter (84) im kontinuierlichen Betrieb Langstoffe (85) und Begleitstoffe (86) getrennt werden und die Begleitstoffe (86) in einem zweiten Aufbereiter (87) chargenweise behandelt werden, wobei im zweiten Aufbereiter (87) Langstoffe (90) abgetrennt werden und Begleitstoffe (88) aus dem zweiten Aufbereiter (87) über einen Puffer (89) dem zweiten Aufbereiter (87) wieder zugeführt werden, wobei nach einer Behandlungsdauer die Begleitstoffe (88) aus dem Kreislauf ausgeschleust werden.

## Claims

1. A processor (1) with a closed vessel (2) and having an upper area (3) with a first diameter and a lower area (4) with a second diameter larger than the first diameter, wherein the upper area (3) has a first screw (6) and the lower section (4) has a second screw (7) with a diameter larger than the first screw, wherein a first admission point (8) for materials (9) and a second admission point (10) for water (11) are arranged in the upper area (3), wherein above a separating device (12) are arranged a discharge coil (15) and below the separating device (12) an output (14) for free fibrous material and dissolved materials, ***characterized in that*** the lower area (4) has an upper part (21) and a lower part (22) that are detachably connected to each other in a radially outer area (23).

2. The processor according to claim 1, ***characterized in that*** at the lower end of the second screw (7) a spiral is arranged as a displacer spiral (13).

3. The processor according to any one of the preceding claims, ***characterized in that*** a trap for heavy parts (17) is arranged in the lower area (4).

4. The processor according to any one of the preceding claims, ***characterized in that*** the upper area (3) is separable from the lower area (4).

5. The processor according to any one of the preceding claims, ***characterized in that*** a collar (25) is arranged at the top end (24) of the lower area (4).

6. The processor according to any one of the preceding claims, ***characterized in that*** a perforated metal plate is provided as a separating device (12).

7. The processor in particular according to any one of the preceding claims, ***characterized in that*** a separating device (12) is provided in the form of slots which are more than 2 mm long and less than 1.2 mm, preferably less than 0.3 mm, wide.

8. The processor in particular according to any one of the preceding claims, ***characterized in that*** a separating device (12) is provided in the form of slots, the longitudinal axis of which lies on a straight line which extends in a horizontal or vertical sector of +/- 45° to a tangent to the rotor movement.

9. The processor according to any one of the preceding claims 2 - 8, ***characterized in that*** the displacer spiral (13) in the radially outer area has an end which points upward.

10. The processor according to any one of the preceding claims 2 - 8, ***characterized in that*** the displacer spiral (13) has at least 3 and preferably 5 spiral arms.

11. The processor according to any one of the preceding claims, ***characterized in that*** the diameter of the lower area (4) is at least twice as large and preferably at least three times as large as the diameter of the upper area (3).

12. The processor according to any one of the preceding claims, ***characterized in that*** the admission point (8) for materials enables feeding in under excess pressure.

13. The processor according to any one of the preceding claims, ***characterized in that*** the closed vessel (2) has loose bodies made of plastic.

14. A method for operating a processor (1) having a closed vessel (2) according to claim 1, in which in a pulper (180) having a first perforated metal plate, materials (81) are turned into a fluid form, the larger components are sorted out, easily fraying components are removed through the perforated plate and the larger components are fed to a first processor (84), in which they are separated with a second perforated metal plate having a smaller hole diameter than the first perforated metal plate, and in which elongated substances (85) and accompanying materials (86) are separated in the first processor (84) in continuous operation and the accompanying substances (86) are treated in batches in a second processor (87), wherein elongated substances (90) are separated out in the second processor (87) and accompanying materials (88) are fed from the second processor (87) via a buffer (89) to the second processor (87) again, wherein after a treatment period the accompanying substances (88) are discharged from the circuit.

## Revendications

1. Conditionneur (1) avec un réservoir (2) fermé et avec une région (3) supérieure avec un premier diamètre et une région (4) inférieure avec un deuxième diamètre plus grand que le premier diamètre, la région (3) supérieure comportant une première vis (6) et la région (4) inférieure comportant une deuxième vis (7), dans la région (3) supérieure étant placé un premier accès (8) pour des matières (9) et un deuxième accès (10) pour de l'eau (11), au-dessus d'un dispositif séparateur (12) étant placée une hélice de rejet (15) et en-dessous du dispositif séparateur (12) étant placée une sortie (14) pour de la matière à fibres libres et des matières dissoutes, ***caractérisé en ce que*** la région (4) inférieure comporte une partie supérieure (21) et une partie inférieure (22), qui dans une région (23) extérieure en direction radiale sont reliées l'une à l'autre de manière amovible.

2. Conditionneur selon la revendication 1, ***caractérisé en ce que*** sur l'extrémité inférieure de la deuxième vis (7) est placée une grande spirale en tant que spirale de refoulement (13).

3. Conditionneur selon l'une quelconque des revendications précédentes, ***caractérisé en ce que*** dans la région (4) inférieure est placé un collecteur (17) de fractions lourdes.

4. Conditionneur selon l'une quelconque des revendications précédentes, ***caractérisé en ce que*** la région (3) supérieure est séparable de la région (4) inférieure.

5. Conditionneur selon l'une quelconque des revendications précédentes, ***caractérisé en ce que*** sur l'extrémité (24) supérieure de la région (4) inférieure est placé un collet (25).

6. Séparateur selon l'une quelconque des revendications précédentes, ***caractérisé en ce qu**'*il est prévu une tôle perforée en tant que dispositif séparateur (12).

7. Conditionneur selon l'une quelconque des revendications précédentes, ***caractérisé en ce qu***'*en* tant que dispositif séparateur (12) sont prévues des encoches qui ont une longueur supérieure à 2 mm et une largeur inférieure à 1,2 mm, de préférence inférieure à 0,3 mm.

8. Conditionneur selon l'une quelconque des revendications précédentes, ***caractérisé en ce qu***'en tant que dispositif séparateur (12) sont prévues des encoches dont l'axe longitudinal se situe sur une droite qui s'étend dans un secteur horizontal ou vertical de +/- 45° par rapport à une tangente pour le déplacement du rotor.

9. Conditionneur selon l'une quelconque des revendications 2 à 8 précédentes, ***caractérisé en ce que*** dans la région radiale externe, la spirale de refoulement (13) comporte une extrémité dirigée vers le haut.

10. Conditionneur selon l'une quelconque des revendications 2 à 8 précédentes, ***caractérisé en ce que*** la spirale de refoulement (13) comporte au moins 3 et de préférence 5 bras de spirale.

11. Conditionneur selon l'une quelconque des revendications précédentes, ***caractérisé en ce que*** le diamètre de la région (4) inférieure est au moins deux fois plus grand et de préférence au moins trois fois plus grand que le diamètre de la région (3) supérieure.

12. Conditionneur selon l'une quelconque des revendications précédentes, ***caractérisé en ce que*** l'accès (8) pour des matières permet une alimentation sous surpression.

13. Conditionneur selon l'une quelconque des revendications précédentes, ***caractérisé en ce que*** le réservoir (2) fermé comporte des corps en vrac en matière plastique.

14. Procédé destiné à faire fonctionner un conditionneur (1), avec une réservoir (2) fermé selon la revendication 1, lors duquel dans un triturateur (180) avec une première tôle perforée, des matières (81) sont rendues fluides, les plus grands composants sont triés et éliminés, les composants facilement fibrillables sont évacués par l'intermédiaire de la tôle perforée et les plus grands composants sont amenés dans un premier conditionneur (84), dans lequel ils sont séparés à l'aide d'une deuxième tôle perforée qui présente des trous d'un diamètre inférieur à ceux de la première tôle perforée et lors duquel, dans le premier conditionneur (84), des matières allongées (85) et des impuretés (86) sont séparées en fonctionnement continu et les impuretés (86) sont traitées par charges dans un deuxième conditionneur (87), dans le deuxième conditionneur (87), les matières allongées (90) étant séparées et évacuées et à partir du deuxième conditionneur (87), les impuretés (88) étant ramenées par l'intermédiaire d'un tampon (89) vers le deuxième conditionneur (87), après une durée de traitement, les impuretés (88) étant éclusées hors du circuit.
